# EUROPÄISCHE PATENTSCHRIFT

(11) **EP 3 049 488 B1**
(45) Veröffentlichungstag und Bekanntmachung des Hinweises auf die Patenterteilung: **27.06.2018**
(21) Anmeldenummer: 14771862.1
(22) Anmeldetag: 19.09.2014
(51) Int. Cl.: C09D 183/08, C08L 83/08

(54) **POLYSILOXANE MIT QUATERNIERTEN HETEROCYCLISCHEN GRUPPEN**
POLYSILOXANES WITH QUATERNIZED HETEROCYCLIC GROUPS
POLYSILOXANES COMPRENANT DES GROUPES HÉTÉROCYCLIQUES QUATERNISÉS

(30) Priorität: 23.09.2013 DE 102013219046
(43) Veröffentlichungstag der Anmeldung: 03.08.2016
(73) Patentinhaber: Rudolf GmbH, 82538 Geretsried (DE)
(72) Erfinder: DEHM, Volker, 82515 Wolfratshausen (DE); DUSCHEK, Gunther, 83671 Benediktbeuern (DE); HAYESSEN, Rainer, 82538 Geretsried (DE); SIELEMANN, Dirk, 82515 Wolfratshausen (DE); TEICHERT, Martin, 82515 Wolfratshausen (DE)
(74) Vertreter: Weickmann & Weickmann PartmbB
(86) Internationale Anmeldenummer: PCT/EP2014/070019
(87) Internationale Veröffentlichungsnummer: WO 2015/040171

(56) Entgegenhaltungen:
- WO-A1-96/06834
- DE-A1- 10 051 258
- DE-C1- 3 719 086

## Beschreibung

Die vorliegende Erfindung betrifft Polysiloxane mit quaternierten heterocyclischen Gruppen in der Seitenkette, deren Herstellung und deren Verwendung, insbesondere zur Ausrüstung von Textilien und zur Hydrophobierung von Gegenständen.

Aminogruppen-enthaltende Polysiloxane werden seit längerer Zeit als Textilausrüstungsmittel eingesetzt. Bei den damit behandelten Textilien werden gute Weichgriffeffekte erreicht. Die vorteilhaften Weichgriffeffekte werden darauf zurückgeführt, dass die Aminogruppen in der Seitenkette des Polysiloxans eine Affinität zu den Fasern aufweisen und durch die daraus resultierende Orientierung des Polymermoleküls ein guter Weichgriff verursacht wird. Üblicherweise werden die Polysiloxane als flüssige Zubereitung, beispielsweise in Form von wässrigen Emulsionen, auf das Textil aufgebracht.

Ein Nachteil der Zubereitungen, die aminofunktionelle Polysiloxane enthalten, ist die Labilität der aus ihnen hergestellten Anwendungsflotten gegenüber pH-Wert-Schwankungen. So werden in diesen Systemen bei höheren pH-Werten, zum Beispiel bei einem pH-Wert >7, Ausfällungen des Polysiloxans bzw. Phasentrennung beobachtet. Die Labilität der Systeme wird auf den unterschiedlichen Protonierungsgrad der Aminogruppen zurückgeführt. Kommt es im Laufe des Textilveredelungsprozess zu pH-Wert-Schwankungen ist ein homogener Auftrag des Textilveredelungsmittels nicht mehr gewährleistet. Gerade beim Textilveredelungsprozess werden aber sehr viele Behandlungsschritte in stark alkalischem Milieu durchgeführt. Bei nicht ausreichend durchgeführten Waschprozessen können Restmengen von Alkalien auf dem Substrat verbleiben und während der nachfolgenden Veredelungsschritte in die Behandlungsbäder eingeschleppt werden. Insbesondere auf Anlagen mit wenig Behandlungsflotte, wie zum Beispiel dem Foulard, kann dabei der pH-Wert der Ausrüstungsflotte in kürzester Zeit auf >9 ansteigen. So kommt es unter Umständen zu den erwähnten starken Ausfällungen, womit eine gleichmäßige, fleckenfreie Ausrüstung der Textilware nicht mehr möglich ist.

Ein weiterer Nachteil der genannten aminofunktionellen Polysiloxane liegt in ihrer Vergilbungstendenz, welche insbesondere bei weißen und hellfarbigen textilen Substraten bei Trocknungstemperaturen über 120 °C, sowie nach längerer Exposition der ausgerüsteten Ware mit Luftsauerstoff zum Vorschein kommt.

Zwar existieren verschiedene Ansätze, welche durch geeignete Modifikationen der chemischen Struktur des verwendeten Polysiloxans diese Nachteile beseitigen. So lässt sich durch Ersetzen der Aminofunktionen durch Amidofunktionen oder permanent quaternierten Ammoniumgruppen im verwendeten Polysiloxan die Vergilbungsneigung der ausgerüsteten Textilware deutlich reduzieren. Durch letztere lässt sich zudem eine gute bis sehr gute pH-Wert-Stabilität erreichen. Allerdings gehen diese Verbesserungen mit einer deutlichen Minderung des Weichgriffeffektes auf der ausgerüsteten Textilware einher.

Eine weitere Substanzklasse, welche als Weichgriffmittel für Textilwaren weit verbreitet Einsatz findet, sind Fettsäurekondensationprodukte (FSK-Produkte). Diese gehen aus einer Kondensationsreaktion von Fettsäuren mit langen Alkylketten und einer oder mehreren Amin- und/oder Hydroxygruppen enthaltenden Verbindungen hervor, und beinhalten Ester- und/oder Amidofunktionen und ggf. quaternäre Ammoniumfunktionen (z.B. in Esterquats) oder auch quaternierte Imidazolinium-Heterocyclen. Der Weichgriff resultiert bei diesen Produkten durch das Zusammenspiel aus den langen Fettresten und textilaffinen Ankergruppen. Zwar sind solche FSK-Produkte nicht geeignet um Textilwaren einen vergleichbar hervorragenden Weichgriff zu verleihen wie dies Polysiloxane vermögen, allerdings finden FSK-Produkte nicht zuletzt aufgrund ihres vergleichbar niedrigen Preisniveaus breite Anwendung in der Textilveredelung. Es besteht daher das Bestreben durch Beimischen von Polysiloxanen zu FSK-Produkten den Weichgriff letzterer zu verbessern. Jedoch ist die Herstellung von Mischungen von FSK-Produkten und Organopolysiloxanen aufgrund ihrer gegenseitigen Unverträglichkeit generell problematisch. Es erfolgt sowohl in Substanz als auch in Zubereitungen eine schnelle Entmischung, was die Herstellung von stabilen, vergleichsweise günstigen Compound-Produkten verhindert.

Es wurden große Bemühungen unternommen, um die o.g. Nachteile auszuräumen.

DE 10 2004 025 131 A1 beschreibt derivatisierte, permanent quaternierte Stickstoffatome aufweisende aminofunktionelle Organopolysiloxane, die neben nicht quaternierten Aminogruppen aliphatisch quaternierte Ammoniumgruppen aufweisen.

In DE 10 2005 014 311 A1, DE 10 251 526 A1 und DE 10 251 524 A1 werden Polyamino- und/oder Polyammonium-Polysiloxan-Copolymer-Verbindungen offenbart, bei denen quaternierte heterocyclische Ammoniumgruppen in der Polymerkette, aber nicht in der Seitenkette vorliegen.

DE 10 051 258 A1 beschreibt quaternäre Polysiloxane mit aliphatischen Ammoniumgruppen, die endterminierte quaternierte Imidazolingruppen enthalten können.

DE 102 14 982 offenbart Polysiloxane zur Verwendung in textilen Hilfsmitteln. Die Polysiloxane enthalten als essentielles Merkmal eine Epoxidgruppe in der Seitenkette, die mit geeigneten nukleophilen Gruppen auf der Textilfaser reagieren können und dadurch eine kovalente Anbindung ermöglichen. Die in DE 102 14 982 beschriebenen Polysiloxane sind daher nur für die Ausrüstung natürlicher Fasern wie z.B. Baumwolle geeignet. Die kovalente Anbindung des Polysiloxans an die Faser trägt zu einer erhöhten Waschpermanenz bei, beeinträchtigt allerdings auch das Eigenschaftsverhalten der ausgerüsteten Faser im Hinblick auf das Griffverhalten. Ferner bestehen toxikologische Bedenken bei unvollständiger Umsetzung der Epoxidgruppen. Die Polysiloxane können u.a. auch quaternierte Imidazolinium-Gruppen enthalten, die über einen Hydroxyfunktionalisierten Linker an das Siloxangerüst gebunden sind, deren Herstellung allerdings mit erheblichem verfahrenstechnischen Aufwand verbunden ist.

Aus DE 19 652 524 A1 sind quaternäre Ammoniumgruppen tragende Organopolysiloxane bekannt, bei denen aliphatische, quaternierte Ammoniumgruppen in der Seitenkette vorliegen.

DE 10 004 321 A1 beschreibt Organosiliciumverbindungen, die in der Seitenkette quaternäre Ammoniumgruppen und tertiäre Aminogruppen aufweisen.

WO 96/008499 und WO 96/06834 beschreiben Imidazolin-haltige Silicone sowie Säuresalze von Imidazolin-haltigen Siliconen. In EP 707 029 werden Imidazolingruppen-haltige Organopolysiloxane beschrieben.

DE 3 719 086 beansprucht diquaternäre endterminierte Polysiloxane.

WO 2004/041912 beschreibt Polysiloxane mit quaternierten, heterocyclischen Aromaten, deren positive Ladung delokalisiert ist.

Es bestand daher die Aufgabe ein verbessertes Polysiloxan bereitzustellen, welches die Nachteile des Standes der Technik überwindet.

Es wurde nun gefunden, dass Polysiloxane, welche in der Seitenkette quaternierte heterocyclische Gruppen enthalten, nahezu keine Vergilbungstendenz und eine sehr gute pH-Wert-Stabilität aufweisen. Zudem verleihen sie Textilsubstraten einen ausgezeichneten Weichgriff. Durch das Einbringen der Alkylkomponente in das Polysiloxan wird weiterhin die Verträglichkeit mit FSK-Produkten deutlich erhöht, so dass Zubereitungen beider Stofftypen miteinander möglich werden.

Ein Aspekt der vorliegenden Erfindung umfasst daher ein Polysiloxan, umfassend mindestens einen Baustein der Formel (I) 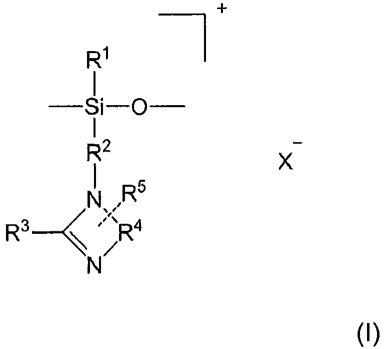 wobei
- R¹: C₁₋₆-Alkyl oder Phenyl,
- R²: C₁₋₆-Alkylen,
- R³: ein gesättigter oder mindestens einfach ungesättigter, linearer oder verzweigter Kohlenwasserstoff-Rest mit 7-29, bevorzugt 11-25 Kohlenstoffatomen, ggf. substituiert mit Hydroxy,
- R⁴: -CₐH₂ₐ-, ggf. substituiert mit C₁₋₆-Alkyl, C₁₋₆-Alkoxy, Hydroxy oder Amino,
- R⁵: ein gesättigter, mindestens einfach ungesättigter oder aromatischer Kohlenwasserstoff-Rest mit 1-20 Kohlenstoffatomen, der gegebenenfalls Heteroatome ausgewählt aus S, O und N enthält, ggf. substituiert ist, und mit einem der beiden Stickstoffatome in der Ringstruktur ein quaternäres Ammoniumion bildet,
- a: 2 oder 3, und
- X⁻: ein organisches oder anorganisches Anion

ist.

Die Anionen X⁻ sind bevorzugt von anorganischen oder organischen Säuren abgeleitet. Als Beispiele für anorganische Anionen sind Chlorid, Bromid, lodid und Sulfat zu nennen; bevorzugt sind Chlorid und Sulfat, stärker bevorzugt Chlorid. Beispiele für organische Anionen sind Methosulfat, Tosylat und Acetat; bevorzugt sind Methosulfat und Tosylat.

In einer bevorzugten Ausführungsform umfasst das erfindungsgemäße Polysiloxan mindestens einen Baustein der Formel (la)

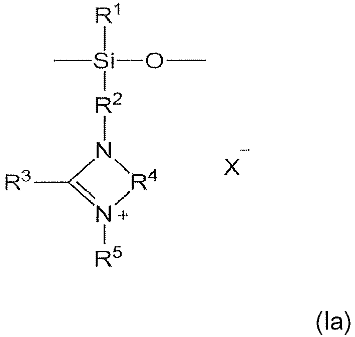

Bevorzugt ist R¹ C₁₋₆-Alkyl, insbesondere bevorzugt Methyl.

In einer bevorzugten Ausführungsvariante ist R² -(CH₂)₃- oder -CH₂-CHCH₃-CH₂-.

R³ ist bevorzugt ein gesättigter oder mindestens einfach ungesättigter Kohlenwasserstoff-Rest einer Fettsäure, wobei sich der Kohlenwasserstoff-Rest einer Fettsäure auf den Rest bezieht, der an die Carbonsäuregruppe (-COOH) gebunden ist.

Bevorzugte gesättigte Fettsäuren sind Laurinsäure, Myristinsäure, Palmitinsäure, Margarinsäure, Stearinsäure, Arachinsäure, Behensäure, Lignocerinsäure oder Cerotinsäure, besonders bevorzugt Palmitinsäure, Behensäure, Laurinsäure oder Stearinsäure, insbesondere bevorzugt Stearinsäure und Behensäure.

Bevorzugte ungesättigte Fettsäuren sind beispielsweise Myristoleinsäure, Palmitoleinsäure, Petroselinsäure, Ölsäure, Elaidinsäure, Vaccensäure, Gadoleinsäure, Icosensäure, Cetoleinsäure, Linolsäure, alpha-Linolensäure, gamma-Linolensäure, Kalendulasäure, Punicinsäure, alpha-Elaeostearinsäure, beta-Elaeosterinsäure, Arachidonsäure, Timnodonsäure, Clupanodonsäure, Cervonsäure, Vernolsäure oder Rizinolsäure, insbesondere Palmitoleinsäure, Ölsäure, Icosensäure, Cetoleinsäure, besonders bevorzugt Ölsäure und Cetoleinsäure.

R⁴ ist bevorzugt -CH₂-CH₂- oder -(CH₂)₃-, stärker bevorzugt -CH₂-CH₂-.

Die Quaternierung durch R⁵ in Formel (I) erfolgt am Stickstoff in 1- und/oder in 3-Position. R⁵ ist bevorzugt C₁₋₆-Alkyl, insbesondere bevorzugt Methyl oder Ethyl, oder Benzyl. R⁵ kann gegebenenfalls substituiert sein, bevorzugt mit C₁₋₆-Alkyl, C₁₋₆-Alkoxy, Hydroxy oder Amino.

Der Baustein der Formel (I) und/oder (la) macht bevorzugt 0,1-20 mol%, stärker bevorzugt 0,3-10 mol% und noch stärker bevorzugt 0,5-5 mol% bezogen auf das Polysiloxan aus. Der Baustein gemäß Formel (I) und/oder (la) kann im Polysiloxan statistisch, alternierend oder in Form von Blöcken verteilt sein, bevorzugt liegt der Baustein der Formel (I) und/oder (la) statistisch verteilt im Polysiloxan vor. Die Bausteine gemäß Formel (I) und/oder (la) innerhalb des Polysiloxanmoleküls können gleich oder unterschiedlich im Rahmen der o.g. Definition sein.

Das erfindungsgemäße Polysiloxan umfasst ferner mindestens einen Baustein der Formel (II) 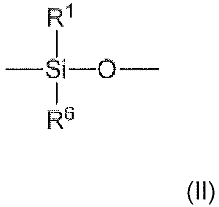 wobei R⁶ C₁₋₁₀-Alkyl oder Phenyl ist. In einer bevorzugten Ausführungsform ist R⁶ Methyl, Ethyl oder Phenyl, stärker bevorzugt Methyl. R¹ ist wie oben definiert.

Der Baustein der Formel (II) macht bevorzugt 80-99,9 mol-%, stärker bevorzugt 90-99,7 mol-%, noch stärker bevorzugt 95-99,5 mol-% bezogen auf das Polysiloxan aus. Die Bausteine der Formel (II) können statistisch, alternierend oder in Form von Blöcken innerhalb des Polysiloxanmoleküls verteilt sein, bevorzugt liegt der Baustein der Formel (II) statistisch verteilt im Polysiloxan vor. Die Bausteine gemäß Formel (II) können innerhalb des Polysiloxanmoleküls gleich oder verschieden im Rahmen der o.g. Definition sein.

In einer bevorzugten Ausführungsform kann das erfindungsgemäße Polysiloxan ferner mindestens einen Baustein der Formel (III) umfassen. 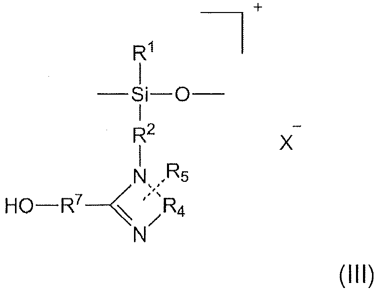 wobei R⁷ C₂₋₆-Alkylen oder C₃₋₆-Alkenylen ist. R⁷ ist stärker bevorzugt n-Propylen, i-Propylen, n-Butylen, i-Butylen, n-Pentylen, i-Pentylen oder Propenylen, besonders bevorzugt n-Propylen. R¹, R², R⁴ und R⁵ sind wie oben definiert.

In einer bevorzugten Ausführungsform kann das erfindungsgemäße Polysiloxan mindestens einen Baustein der Formel (IIIa) umfassen.

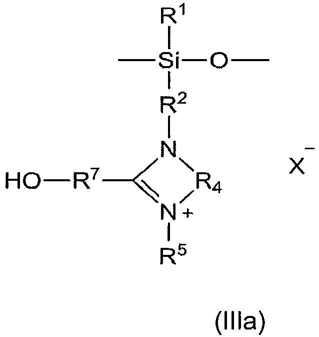

Der Baustein der Formel (III) und/oder (IIIa) macht bevorzugt 0-4 mol-%, stärker bevorzugt 0-3 mol-%, stärker bevorzugt 0-2 mol-% bezogen auf das Polysiloxan aus. In einer anderen Ausführungsform liegt die Untergrenze an Baustein (III) und/oder (IIIa) bei 0,001 mol-%. Der Baustein gemäß Formel (III) und/oder (IIIa) kann im Polysiloxan statistisch, alternierend oder in Form von Blöcken verteilt sein, bevorzugt liegt der Baustein der Formel (III) und/oder (IIIa) statistisch verteilt im Polysiloxan vor. Die Bausteine gemäß Formel (III) und/oder (IIIa) innerhalb des Polysiloxanmoleküls können gleich oder unterschiedlich im Rahmen der o.g. Definition sein.

Das erfindungsgemäße Polysiloxan kann ferner auch mindestens einen Baustein der Formel (V) und gegebenenfalls der Formel (VI) umfassen, 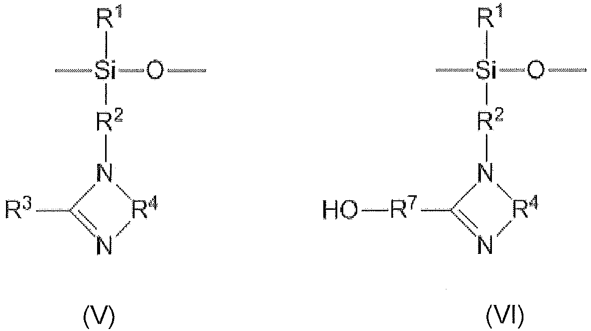 wobei R¹ bis R⁴ und R⁷ wie oben definiert sind und je nach eingestelltem pH-Wert auch in Form von Salzen einer Säure vorliegen können.

In dem Polysiloxan macht der Baustein der Formel (V) bevorzugt 0-10 mol-%, stärker bevorzugt 0-5 mol-% bezogen auf das Polysiloxan aus. Der Baustein der Formel (VI) ist im Polysiloxan mit bevorzugt 0-4 mol-%, stärker bevorzugt 0-2 mol-% zugegen. In einer anderen Ausführungsform liegt die Untergrenze der Bausteine der Formeln (V) und/oder (VI) bei 0,001 mol-%. Die Bausteine der Formel (V) und/oder (VI) können statistisch, alternierend oder in Form von Blöcken im Polysiloxan verteilt sein. Bevorzugt sind die Bausteine der Formel (V) und (VI) statistisch im Polysiloxanmolekül verteilt.

In einer bevorzugten Ausführungsform umfasst das Polysiloxan mindestens einen Baustein der Formel (I) und/oder (Ia), mindestens einen Baustein der Formel (II) und gegebenenfalls einen Baustein der Formel (III) und/oder (IIIa).

In einer anderen Ausführungsform umfasst das Polysiloxan mindestens einen Baustein der Formel (I) und/oder (la), mindestens einen Baustein der Formel (II) und einen Baustein der Formel (III) und/oder (IIIa).

Das erfindungsgemäße Polysiloxan ist bevorzugt jeweils mit R'₃SiO- und -SiR'3 terminiert, wobei R' unabhängig voneinander C₁₋₁₆-Alkyl, C₁₋₁₆-Alkoxy oder -OH, bevorzugt Methyl, Ethyl, n-Propyl, i-Propyl oder -OH und besonders bevorzugt Methyl oder -OH ist.

Der Terminus R'₃SiO- ist kovalent an das Siliziumatom des einen terminalen Bausteins gebunden, während der Rest -SiR'₃ kovalent an das Sauerstoffatom des anderen terminalen Bausteins gebunden ist.

In besonders bevorzugten Ausführungsformen ist das Polysiloxan mit Me₃SiO- und -SiMe₃; Me₃SiO- und -SiMe₂OH; oder HOMe₂SiO- und -SiMe₂OH terminiert.

In einer besonders bevorzugten Ausführungsform ist das Polysiloxan der vorliegenden Erfindung frei von Epoxidgruppen.

Die Bezeichnung "C_{x-y}-Alkyl" bedeutet jeweils einen linearen oder verzweigten Alkylrest mit x-y Kohlenstoffatomen, beispielsweise kann C₁₋₆-Alkyl Methyl, Ethyl, n-Propyl, i-Propyl, n-Butyl, i-Butyl, n-Pentyl, i-Pentyl, n-Hexyl oder i-Hexyl sein. Die Bezeichnung "C₃₋₆-Alkenyl" bedeutet einen linearen oder verzweigten Alkenylrest mit 3-6 Kohlenstoffatomen, beispielsweise Ethenyl, n-Propenyl, i-Propenyl, n-Butenyl, i-Butenyl, n-Pentenyl, i-Pentenyl, n-Hexenyl oder i-Hexenyl. Die Bezeichnung "C_{x-y}-Alkoxy" bedeutet eine Gruppierung -O-C_{x-y}-Alkyl.

Der Gesamtstickstoffgehalt des Polysiloxans liegt bevorzugt bei 0,05-6 Gew.-%, bevorzugt bei 0, 1-3 Gew.-% bezogen auf die Gesamtzusammensetzung.

Bevorzugt sind mindestens 40 %, stärker bevorzugt mindestens 50 % und noch stärker bevorzugt mindestens 60 % aller Heterocyclen im Polysiloxanmolekül quaterniert.

In einer bevorzugten Ausführungsform ist das gewichtsmittlere Molekulargewicht M_{w} des Polysiloxans 2.000-100.000 g/mol, bevorzugt 3.000-80.000 g/mol, stärker bevorzugt bei 5.000-60.000 g/mol.

Ein weiterer Aspekt der Erfindung ist eine Zubereitung, umfassend ein erfindungsgemäßes Polysiloxan und Wasser und/oder ein organisches Lösungsmittel. Bevorzugt enthalten die Zubereitungen neben dem erfindungsgemäßen Polysiloxan Wasser und ein organisches Lösungsmittel. Als organische Lösungsmittel werden bevorzugt halogenierte und nichthalogenierte Kohlenwasserstoffe, Alkohole, Glycole, Ether, Ester, Ketone, Aromaten, z.B. Benzol, Phenol, oder Xylol, und Polyoxyalkylene, insbesondere Polyethylenglycol und Polypropylenglycol verwendet. Die Zubereitungen liegen bevorzugt in Form von Lösungen oder in Form von Emulsionen, insbesondere Makro- oder Mikroemulsionen vor.

Die Zubereitungen können ferner dem Fachmann bekannte Additive enthalten, wie beispielsweise Emulgatoren, Hydrotropika, organische Säuren, wie z.B. Essigsäure, anorganische und/oder organische Partikel, Fettsäurekondensate, Polyalkylenwachse, fluorierte Polymere und/oder Silikone. Der Anteil der Additive beträgt bevorzugt 0, 1, 2 oder 5 Gew.-% bis 20, 25 oder 30 Gew.-% bezogen auf die Gesamtzubereitung.

Bevorzugt enthalten die erfindungsgemäßen Zubereitungen mindestens einen Emulgator und/oder mindestens ein Hydrotropikum, insbesondere mindestens einen Emulgator.

Als Emulgatoren können anionische, kationische, nichtionogene oder amphotere Emulgatoren oder Mischungen davon eingesetzt werden. Vorzugsweise werden Alkoxylierungsprodukte aliphatischer Alkohole mit 6 bis 22 Kohlenstoffatomen verwendet, die bis zu 50 Mol Alkylenoxid-Einheiten, insbesondere Ethylenoxid- und/oder Propylenoxid-Einheiten, umfassen. Die Alkohole können bevorzugt 8 bis 16 Kohlenstoffatome enthalten; sie können gesättigt, linear oder vorzugsweise verzweigt sein und können allein oder in Mischungen zur Anwendung gelangen.

Oben genannte Emulgatoren aus verzweigten aliphatischen Alkoholen sind besonders bevorzugt aufgrund ihrer günstigen Gesamteigenschaften. Beispiele hiefür sind Ethoxylate des 2,6,8-Trimethyl-4-nonanols, Isodecylalkohols oder Isotridecylalkoholes mit jeweils 2-50 Mol, insbesondere 3-15 Mol Ethylenoxid-Einheiten.

Von besonderem Vorteil hinsichtlich niedriger Schaumentwicklung in den Anwendungsflotten sind o.g. Emulgatoren, wenn die Alkylenoxid-Einheiten in statistischer Verteilung und vorzugsweise in blockartiger Verteilung vorliegen.

Als Hydrotropikum kann ein polyfunktioneller Alkohol verwendet werden. So können Dialkohole mit 2-10, bevorzugt 2-6 insbesondere 2-4 Kohlenstoffatomen pro Molekül eingesetzt werden. Gut geeignet sind auch deren Mono- und Diether sowie Mono- und Diester. Als besonders bevorzugtes Hydrotropikum sind Butyldiglycol, 1,2-Propylenglycol und Dipropylenglycol zu nennen.

In einer bevorzugten Ausführungsform können die erfindungsgemäßen Zubereitungen ferner konventionelle Polysiloxane und/oder FSK-Produkte enthalten. Solche Abmischungen sind außerordentlich homogen und stabil und haben ein gegenüber den reinen FSK-Produkten stark verbessertes Griffniveau.

In einer bevorzugten Ausführungsform enthält die erfindungsgemäße Zubereitung etwa 3-80 Gew.-%, bevorzugt 5-60 Gew.-% und stärker bevorzugt 10-50 Gew.-% des erfindungsgemäßen Polysiloxans bezogen auf die Gesamtzubereitung.

Es wurde gefunden, dass mit erfindungsgemäßen Zubereitungen ausgerüstete Textilwaren zudem einen antistatischen Effekt, sowie eine Verbesserung in der Vernähbarkeit aufweisen. Damit ausgerüstete Garne zeigten außerdem ein deutlich verbessertes Verhalten in ihrer Verarbeitbarkeit.

Die erfindungsgemäßen Zubereitungen werden durch dem Fachmann bekannte Mischverfahren bei Temperaturen von bevorzugt 10-80 °C erhalten. So können erfindungsgemäße Polysiloxane beispielsweise unter Anwendung moderater bis hoher Scherkräfte, z.B. mittels Rührer, Ultraturrax oder Homogenisator in Emulsion gebracht werden. Der Zusatz einer Säure, z.B. Essigsäure oder Milchsäure, fördert dabei unter Umständen den Prozess der Emulgierung erheblich.

Ein weiterer Aspekt der vorliegenden Erfindung ist ein Verfahren zur Herstellung eines erfindungsgemäßen Polysiloxans. Hierzu wird ein Polysiloxan bereitgestellt, das mindestens einen Baustein der Formel (IV) umfasst (Schritt (i)).

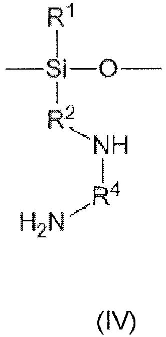

Der Baustein der Formel (IV) des in Schritt (i) bereitgestellten Polysiloxans wird anschließend mit R3-COOH und gegebenenfalls 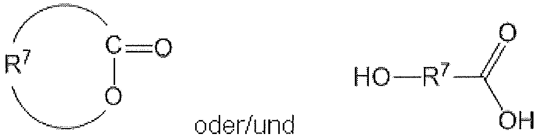 im Schritt (ii) umgesetzt zu Bausteinen der Formel (V) und gegebenenfalls (VI).

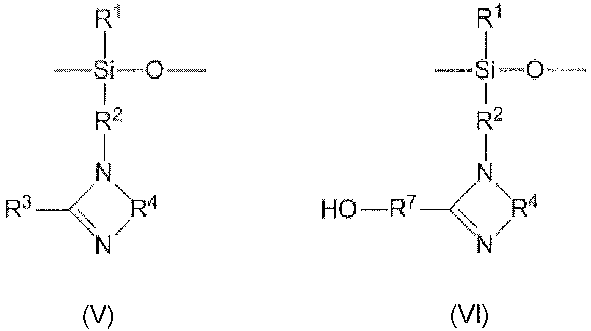

Im Schritt (iii) werden die Stickstoffatome in den Bausteinen der Formel (V) und gegebenenfalls (VI) zumindest teilweise quaterniert.

In einer bevorzugten Ausführungsform umfasst das in Schritt (i) bereitgestellte Polysiloxan Bausteine der Formel (IV) und Bausteine der Formel (II). In einer weiteren Ausführungsvariante kann das in Schritt (i) bereitgestellte Polysiloxan ausschließlich Bausteine der Formel (IV) enthalten. In diesem Fall können Bausteine der Formel (II) in einem späteren Schritt in das Polysiloxan eingeführt werden.

Die Umsetzung im Schritt (ii) erfolgt bevorzugt bei 120-230 °C. Das dabei freiwerdende Wasser kann während der Reaktion kontinuierlich entfernt werden, gegebenenfalls in Gegenwart eines Lösungs- bzw. Schleppmittels, z.B. Xylol.

Der Schritt (iii) wird bevorzugt mit dem Fachmann bekannten Quaternierungsmitteln, wie z.B. Dimethylsulfat, Diethylsulfat, Methyltosylat, Methylchlorid oder Benzylchlorid, bevorzugt in Gegenwart eines Lösungsmittel, z.B. Butyldiglycol, bei Temperaturen zwischen 10-80 °C durchgeführt.

In einer bevorzugten Ausführungsform liegt der Quaternierungsgrad aller Heterocyclen im Schritt (iii) bei mindestens 40 %, bevorzugt mindestens 50 %, stärker bevorzugt mindestens 60 %, bezogen auf sämtliche Heterocyclen.

Ein weiterer Gegenstand der Erfindung ist die Verwendung der erfindungsgemäßen Polysiloxane bzw. der erfindungsgemäßen Zubereitungen zur Textilausrüstung beispielsweise in wässrigen Bädern und Anwendungsflotten, gegebenenfalls zusammen mit weiteren Präparationsmitteln. Als zusätzliche Präparationsmittel kommen beispielsweise Chemikalien zur Knitterfreiausrüstung oder andere, üblicherweise in textilen Applikationsflotten zur Anwendung gelangende Produkte in Frage.

Es hat sich gezeigt, dass die erfindungsgemäßen Polysiloxane hervorragende Adhäsion an polare wie unpolare Fasern aufweisen und somit eine gute Waschpermanenz gewährleisten, auch wenn keine kovalente Anbindung an die Faser erfolgt.

So können Gewebe, Gewirke und Garne aus nativen Fasern, wie beispielsweise Baumwolle oder Wolle, aber auch aus synthetischen Fasern, wie beispielsweise Viskose, Polyester, Polyamid, Polyacrylnitril oder Polyolefin, mit den erfindungsgemäßen Polysiloxanen oder Zubereitungen effektiv behandelt werden.

Die Konzentration der erfindungsgemäßen Zubereitungen in den Anwendungsflotten wird so gewählt, dass die behandelten Substrate zwischen 0,1 und 5 Gew.-% der erfindungsgemäßen Polysiloxane bezogen auf das Gewicht des Substrats enthalten. Eine bevorzugte Anwendung mit den erfindungsgemäßen Zubereitungen oder Polysiloxanen erfolgt als Zwangsapplikation durch Tränken des Substrats mit der Anwendungsflotte, anschließendes Abquetschen auf dem Foulard und einer abschließenden Trocknungspassage. Weitere bevorzugte Anwendungsmöglichkeiten stellen das Ausziehverfahren, Sprühapplikationen, sowie ein einseitiger Auftrag mittels Druck- oder Pflatschverfahren dar.

Es hat sich gezeigt, dass sich die erfindungsgemäßen Polysiloxane und die erfindungsgemäßen Zubereitungen hervorragend als Textilausrüstungsmittel für verschiedene Textilsubstrate eignen. So konnte nicht nur der Weichgriff gegenüber herkömmlich ausgerüsteten Textilsubstraten erhalten bzw. verbessert werden, sondern auch die im Stand der Technik dargelegten bekannten Nachteile der Vergilbung und der pH-Instabilität der Anwendungsflotte überwunden werden.

Ein weiterer Gegenstand der Erfindung ist die Verwendung des erfindungsgemäßen Polysiloxans bzw. der erfindungsgemäßen Zubereitung zur Hydrophobierung von Gegenständen. Die Hydrophobierung von Gegenständen kann durch Beschichten der Oberfläche des Gegenstands erfolgen. Dabei kommen übliche Methoden, wie z.B. Sprühen, Streichen, Drucken, Rakeln, Tauchen, Tränken, Druckimprägnieren etc. zum Einsatz. Alternativ kann das erfindungsgemäße Polysiloxan bzw. die erfindungsgemäße Zubereitung als Additiv in das Material der Gegenstände homogen eingearbeitet werden. Der Anteil an Zubereitung oder Polysiloxan sollte dabei etwa 0,001-10 Gew.-%, bevorzugt 0,1-5 Gew.-% bezogen auf das Matrixmaterial ausmachen.

Die Erfindung wird mit den nachfolgenden Beispielen näher erläutert.

### Beispiele

### Vergleichsbeispiel 1 (nicht erfindungsgemäß)

Die Zubereitung besteht aus einer wässrigen Makroemulsion, enthaltend 10 Gew.-% REWOQUAT W 90 DPG der Firma EVONIK, beinhaltend 1-Methyl-2-nortalgalkyl-3-talgfettsäureamidoethylimidazoliniummethosulfat als Wirkstoffkomponente.

### Vergleichsbeispiel 2 (nicht erfindungsgemäß)

Die Zubereitung besteht aus einer wässrigen Mikroemulsion, enthaltend 20 Gew-% FINISH WR 301 der Firma WACKER, ein Aminoethylaminopropylfunktionalisiertes Organopolysiloxan, 10 Gew.-% eines Isodecylalkoholes mit 7 Ethlenoxidgruppen und 0,4 Gew.-% Essigsäure 60 %. Der Gesamtstickstoffgehalt des Organopolysiloxanes beträgt 0,39 Gew.-%.

### Vergleichsbeispiel 3 (nicht erfindungsgemäß)

Die Zubereitung besteht aus einer wässrigen Mikroemulsion, enthaltend 20 Gew.-% des amidofunktionalisierten Organopolysiloxanes DC 8813 der Firma DOW CORNING, 10 Gew.-% eines Isodecylalkoholes mit 7 Ethlenoxidgruppen und 0,4 Gew.-% Essigsäure 60 %.

### Vergleichsbeispiel 4 (nicht erfindungsgemäß)

Die Zubereitung besteht aus einer wässrigen Mikroemulsion eines Polysiloxans mit lateral positionierten, quaternierten Stickstofffunktionen, deren Herstellung in DE 19 652 524 Beispiel 1 beschrieben ist.

### Vergleichsbeispiel 5 (nicht erfindungsgemäß)

Die Zubereitung besteht aus einer wässrigen Makroemulsion enthaltend 20 Gew-% eines Polysiloxans, 8 Gew.-% eines Isodecylalkohols mit 7 Ethylenoxidgruppen und 0,4 Gew.-% Essigsäure 60 %. Zur Herstellung der Emulsion werden die o.g. Komponenten bei Temperaturen von 10-80 °C gemischt und anschließend durch portionsweise Zugabe von 10-80 °C warmen Wasser emulgiert.

Das verwendete Polysiloxan wurde wie folgt hergestellt.

Unter einer Stickstoffatmosphäre wurde ein lineares, Aminoethylaminopropylfunktionalisiertes Polysiloxan (162,2 g) mit einem titrierbaren basischen Stickstoffgehalt von 1,1 % (entsprechend 3 mol% an Einheiten der Formel (IV)) mit Palmitinsäure (14,6 g) und Xylol (48,0 g) in einem Dreihalskoben mit KPG-Rührer, Innenthermometer, Rückflusskühler und Wasserabscheider vorgelegt. Die Mischung wurde unter Rühren auf 160 °C erhitzt, 3h unter Rückfluss gerührt und dabei entstehendes Reaktionswasser am Wasserabscheider entfernt. Als Reaktionskontrolle wurde die Säurezahl bestimmt, welche 2,1 mg/g KOH betrug. Anschließend wurde Caprolacton (1,19 g) hinzugegeben und zunächst weitere 2 h unter Rückfluss gerührt. Nachdem das Xylol destillativ entfernt wurde, wurde die Temperatur auf 180 °C erhöht und bei ca. 20 mbar 1 h destilliert. Es wurde der basische Stickstoff des erhaltenen Polysiloxanes titriert, welcher 0,50 % betrug. Zu dieser Produktmischung wurde bei Raumtemperatur Butyldiglycol (44,0 g), destilliertes Wasser (24,0 g) und Essigsäure 60 % (3,1 g) gegeben und 5 min gerührt. Es wurde ein klares, gelbes Öl eines Polysiloxans mit nicht quaternierten Heterocyclen erhalten.

Das derart hergestellte Polysiloxan hat die in Tabelle 1 angegebene Zusammensetzung, wobei R¹ und R⁶ Methyl, R²-(CH₂)₃-, R⁴-(CH₂)₂-, R' Methyl, R³-C₁₅H₃₁ und R⁷-C₅H₁₁- ist.

### Beispiel 6 (erfindungsgemäß)

Die Zubereitung besteht aus einer wässrigen Makroemulsion enthaltend 20 Gew.-% eines Polysiloxans, 8 Gew.-% eines Isodecylalkohols mit 7 Ethylenoxidgruppen und 0,4 Gew.-% Essigsäure 60 %. Zur Herstellung der Emulsion werden die o.g. Komponenten bei Temperaturen von 10-80 °C gemischt und anschließend durch portionsweise Zugabe von 10-80 °C warmen Wasser emulgiert.

Das verwendete Polysiloxan wurde wie folgt hergestellt.

Unter einer Stickstoffatmosphäre wurde ein lineares, Aminoethylaminopropylfunktionalisiertes Polysiloxan (162,2 g) mit einem titrierbaren basischen Stickstoffgehalt von 1,1 % (entsprechend 3 mol% an Einheiten der Formel (IV)) mit Palmitinsäure (14,6 g) und Xylol (48,0 g) in einem Dreihalskoben mit KPG-Rührer, Innenthermometer, Rückflusskühler und Wasserabscheider vorgelegt. Die Mischung wurde unter Rühren auf 160 °C erhitzt, 3 h unter Rückfluss gerührt und dabei entstehendes Reaktionswasser am Wasserabscheider entfernt. Als Reaktionskontrolle wurde die Säurezahl bestimmt, welche 2,1 mg/g KOH betrug. Anschließend wurde Caprolacton (1,19 g) hinzugegeben und zunächst weitere 2 h unter Rückfluss gerührt. Nachdem das Xylol destillativ entfernt wurde, wurde die Temperatur auf 180 °C erhöht und bei ca. 20 mbar 1 h destilliert. Es wurde der basische Stickstoff des erhaltenen Polysiloxans titriert, welcher 0,50 % betrug. Zu dieser Produktmischung wurde nun bei einer Temperatur von 90 °C Butyldiglycol (36,0 g), destilliertes Wasser (24,0 g) und Dimethylsulfat (8,0 g) hinzugegeben und 2 h bei 90 °C gerührt. Es wurde der basische Stickstoff des erhaltenen Polysiloxans bestimmt, welcher 0,01 % betrug. Zu dieser Mischung wurde Essigsäure 60 % (3,1 g) gegeben. Es wurde ein klares, gelbes Öl eines Polysiloxans mit einem Quaternierungsgrad von 99 % bezogen auf die Heterocyclen erhalten.

Das derart hergestellte Polysiloxan hat die in Tabelle 1 angegebene Zusammensetzung, wobei R¹ und R⁶ Methyl, R² -(CH₂)₃-, R⁴ -(CH₂)₂-, R' Methyl, R³ -C₁₅H₃₁, R⁷ -C₅H₁₁- und R⁵ Methyl ist.

### Beispiel 7 (erfindungsgemäß)

Die Zubereitung besteht aus einer wässrigen Makroemulsion enthaltend 20 Gew.-% eines Polysiloxans, 8 Gew.-% eines Isodecylalkohols mit 7 Ethylenoxidgruppen und 0,4 Gew.-% Essigsäure 60 %. Die Emulsion wurde wie in Beispiel 6 hergestellt.

Das verwendete Polysiloxan wurde wie folgt hergestellt.

Unter einer Stickstoffatmosphäre wurde ein lineares, Aminoethylaminopropylfunktionalisiertes Polysiloxan (183,2 g) mit einem titrierbaren basischen Stickstoffgehalt von 0,8 % (entsprechend 2,2 mol% an Einheiten der Formel (IV)) mit Behensäure (16,6 g) und Xylol (49,0 g) in einem Dreihalskoben mit KPG-Rührer, Innenthermometer, Rückflusskühler und Wasserabscheider vorgelegt. Die Mischung wurde unter Rühren auf 160°C erhitzt, 3 h unter Rückfluss gerührt und dabei entstehendes Reaktionswasser am Wasserabscheider entfernt. Als Reaktionskontrolle wurde die Säurezahl bestimmt, welche 3,6 mg/g KOH betrug. Anschließend wurde Butyrolacton (0,60 g) hinzugegeben und zunächst weitere 2 h unter Rückfluss gerührt. Nachdem das Xylol destillativ entfernt wurde, wurde die Temperatur auf 180 °C erhöht und bei ca. 20 mbar 1 h destilliert. Es wurde der basische Stickstoff des erhaltenen Polysiloxans titriert, welcher 0,37 % betrug. Zu dieser Produktmischung wurde nun bei einer Temperatur von 90 °C Butyldiglycol (37,0 g), destilliertes Wasser (25,0 g) und Dimethylsulfat (4,1 g) hinzugegeben und 2 h bei 90 °C gerührt. Es wurde der basische Stickstoff des erhaltenen Polysiloxans bestimmt, welcher 0,11 % betrug. Zu dieser Mischung wurde Essigsäure 60 % (3,0 g) gegeben. Es wurde ein klares, gelbes Öl eines Polysiloxans mit einem Quaternierungsgrad von 62 % bezogen auf alle Heterocyclen erhalten.

Das derart hergestellte Polysiloxan hat die in Tabelle 1 angegebene Zusammensetzung, wobei R¹ und R⁶ Methyl, R²-(CH₂)₃-, R⁴-(CH₂)₂-, R' Methyl, R³-C₂₁H₄₃, R⁷-C₃H₇- und R⁵ Methyl ist.

### Beispiel 8 (erfindungsgemäß)

Die Zubereitung besteht aus einer wässrigen Makromulsion enthaltend 20 Gew.-% eines Polysiloxans, 8 Gew.-% eines Isodecylalkohols mit 7 Ethylenoxidgruppen und 0,4 Gew.-% Essigsäure 60 %. Die Emulsion wurde wie in Beispiel 6 hergestellt.

Das verwendete Polysiloxan wurde wie folgt hergestellt.

Unter einer Stickstoffatmosphäre wurde ein lineares, Aminoethylaminopropylfunktionalisiertes Polysiloxan (168,6 g) mit einem titrierbaren basischen Stickstoffgehalt von 1,0 % (entsprechend 2,7 mol% an Einheiten der Formel (IV)) mit Laurinsäure (5,9 g), Stearinsäure (5,65 g) und Xylol (51,0 g) in einem Dreihalskoben mit KPG-Rührer, Innenthermometer, Rückflusskühler und Wasserabscheider vorgelegt. Die Mischung wurde unter Rühren auf 160 °C erhitzt, 3 h unter Rückfluss gerührt und dabei entstehendes Reaktionswasser am Wasserabscheider entfernt. Als Reaktionskontrolle wurde die Säurezahl bestimmt, welche 2,9 mg/g KOH betrug. Anschließend wurde Valerolacton (1,3 g) hinzugegeben und zunächst weitere 2 h unter Rückfluss gerührt. Nachdem das Xylol destillativ entfernt wurde, wurde die Temperatur auf 180 °C erhöht und bei ca. 20 mbar 1 h destilliert. Es wurde der basische Stickstoff des erhaltenen Polysiloxans titriert, welcher 0,48 % betrug. Zu dieser Produktmischung wurde nun bei einer Temperatur von 90 °C Butyldiglycol (36,0 g), destilliertes Wasser (25,0 g) und Dimethylsulfat (7,5 g) hinzugegeben und 2 h bei 90 °C gerührt. Es wurde der basische Stickstoff des erhaltenen Polysiloxans bestimmt, welcher 0,01 % betrug. Zu dieser Mischung wurde Essigsäure 60 % (3,0 g) gegeben. Es wurde ein klares, gelbes Öl eines Polysiloxans mit einem Quaternierungsgrad von 98 % bezogen auf alle Heterocyclen erhalten.

Das derart hergestellte Polysiloxan hat die in Tabelle 1 angegebene Zusammensetzung, wobei R¹ und R⁶ Methyl, R²-(CH₂)₃-, R⁴-(CH₂)₂-, R' Methyl, R³ eine Mischung aus -C₁₁H₂₃ und -C₁₇H₃₅, R⁷ -C₄H₉- und R⁵ Methyl ist.

### Beispiel 9 (erfindungsgemäß)

Die Zubereitung besteht aus einer wässrigen Makroemulsion enthaltend 20 Gew.-% eines Polysiloxans, 8 Gew.-% eines Isodecylalkohols mit 7 Ethylenoxidgruppen und 0,4 Gew.-% Essigsäure 60 %. Die Emulsion wurde wie in Beispiel 6 hergestellt.

Das verwendete Polysiloxan wurde wie folgt hergestellt.

Unter einer Stickstoffatmosphäre wurde ein lineares, Aminoethylaminopropylfunktionalisiertes Polysiloxan (196,0 g) mit einem titrierbaren basischen Stickstoffgehalt von 0,62 % (entsprechend 1,7 mol% an Einheiten der Formel (IV)) mit Laurinsäure (9,35 g) und Xylol (41,0 g) in einem Dreihalskoben mit KPG-Rührer, Innenthermometer, Rückflusskühler und Wasserabscheider vorgelegt. Die Mischung wurde unter Rühren auf 160 °C erhitzt, 3 h unter Rückfluss gerührt und dabei entstehendes Reaktionswasser am Wasserabscheider entfernt. Als Reaktionskontrolle wurde die Säurezahl bestimmt, welche 4,2 mg/g KOH betrug. Nachdem das Xylol destillativ entfernt wurde, wurde die Temperatur auf 180 °C erhöht und bei ca. 20 mbar 1 h destilliert. Es wurde der basische Stickstoff des erhaltenen Polysiloxans titriert, welcher 0,30 % betrug. Zu dieser Produktmischung wurde nun bei einer Temperatur von 90 °C Butyldiglycol (33,0 g), destilliertes Wasser (25,0 g) und Dimethylsulfat (5,13 g) hinzugegeben und 2 h bei 90 °C gerührt. Es wurde der basische Stickstoff des erhaltenen Polysiloxans bestimmt, welcher 0,02 % betrug. Zu dieser Mischung wurde Essigsäure 60 % (2,5 g) gegeben. Es wurde ein klares, gelbes Öl eines Polysiloxans mit einem Quaternierungsgrad von 93 % bezogen auf alle Heterocyclen erhalten.

Das derart hergestellte Polysiloxan hat die in Tabelle 1 angegebene Zusammensetzung, wobei R¹ und R⁶ Methyl, R² -(CH₂)₃-, R⁴ -(CH₂)₂-, R' Methyl, R³-C₁₁H₂₃ und R⁵ Methyl ist.

### Vergleichsbeispiel 10 (nicht erfindungsgemäß)

Die Zubereitung besteht aus einer wässrigen, milchig-transparenten Emulsion eines Polysiloxans, deren Herstellung in DE 10214982 Beispiel B beschrieben ist.

**Tabelle 1: Zusammensetzung der in den Beispielen verwendeten Polysiloxane**

| **Beispiel** | **(I) [mol%]** | **(II) [mol%]** | **(III) [mol%]** | **(V) [mol%]** | **(VI) [mol%]** | **Quat. [%]** |
|---|---|---|---|---|---|---|
| 5 (Vgl.bsp) | 0 | 96,97 | 0 | 2,72 | 0,31 | 0 |
| 6 | 2,69 | 96,97 | 0,31 | 0,03 | 0,00 | 98,9 |
| 7 | 1,25 | 97,83 | 0,09 | 0,77 | 0,06 | 61,9 |
| 8 | 2,20 | 97,26 | 0,50 | 0,03 | 0,01 | 98,5 |
| 9 | 1,56 | 98,31 | 0 | 0,12 | 0 | 92,7 |

Das gewichtsmittlere Molekulargewicht des Polysiloxans lag jeweils bei etwa 20.000 g/mol.

### Anwendungsbeispiele

### Griffbeurteilung

Abschnitte einer gebleichten, optisch nicht aufgehellten Baumwoll-Frotteeware wurden mit einer wässrigen Flotte aus den Zubereitungen gemäß Beispiel 1-10 und 0,5 g/l Essigsäure (60 %) auf einem Laborfoulard mit einer Nassaufnahme von 80 % ausgerüstet und anschließend 2 min bei 120 °C getrocknet. Anschließend erfolgte die Beurteilung des Griffcharakters der mit den Emulsionen behandelten Testgewebe. Diese unterliegt individuell unterschiedlichen, subjektiven Kriterien. Um trotzdem zu aussagekräftigen Ergebnissen zu kommen, ist eine Beurteilung durch mindestens 5 Testpersonen erforderlich. Die Auswertung der Ergebnisse erfolgte nach statistischen Methoden, wobei die Notenstufe 1 den weichsten, angenehmsten Griff, die Notenstufe 5 den härtesten, wenigsten oberflächenglatten und unangenehmsten Griff innerhalb der Testreihe darstellt.

| | **Einsatzmenge in g/l** | **Griffbewertung innerhalb der Testreihe** |
|---|---|---|
| Vergleichsbeispiel 1 | 40 | 3,3 |
| Vergleichsbeispiel 2 | 20 | 1,4 |
| Vergleichsbeispiel 3 | 20 | 3,5 |
| Vergleichsbeispiel 4 | 20 | 2,1 |
| Vergleichsbeispiel 5 | 20 | 1,7 |
| Beispiel 6 | 20 | 1,3 |
| Beispiel 7 | 20 | 1,2 |
| Beispiel 8 | 20 | 1,5 |
| Beispiel 9 | 20 | 1,6 |
| Vergleichsbeispiel 10 | 13 | 2,6 |
| Unbehandelt | 0 | 5 |

Die erfindungsgemäßen Zubereitungen verleihen den damit ausgerüsteten Textilien einen ausgezeichneten Weichgriff im Vergleich zu den handelsüblichen Weichgriffmitteln.

### Vergilbung

Abschnitte einer gebleichten, nicht optisch aufgehellten Baumwoll-Modal-Maschenware wurden mit einer wässrigen Flotte aus den Zubereitungen gemäß Beispiel 1-10 und 0,5 g/l Essigsäure 60 % auf einem Laborfoulard mit einer Nassaufnahme von 80 % imprägniert, 2 min bei 120 °C getrocknet und anschließend 2 min bei 170 °C thermofixiert. Anschließend wurde der Weißgrad der Muster nach Ganz auf dem Weißgradmeßgerät "datacolor 600" der Firma "datacolor international" (Schweiz) gemessen.

| | **Einsatzmenge in g/l** | **Weißgrad nach Ganz** |
|---|---|---|
| Vergleichsbeispiel 1 | 40 | 192 |
| Vergleichsbeispiel 2 | 20 | 185 |
| Vergleichsbeispiel 3 | 20 | 204 |
| Vergleichsbeispiel 4 | 20 | 210 |
| Vergleichsbeispiel 5 | 20 | 198 |
| Beispiel 6 | 20 | 208 |
| Beispiel 7 | 20 | 204 |
| Beispiel 8 | 20 | 208 |
| Beispiel 9 | 20 | 207 |
| Vergleichsbeispiel 10 | 13 | 203 |
| Unbehandelt | 0 | 203 |

Die erfindungsgemäßen Zubereitungen führen zu keiner Vergilbung des Textilsubstrats. Der Weißgrad der mit den erfindungsgemäßen Zubereitungen ausgerüsteten Substrate entspricht dem des unbehandelten Textils.

### Alkalistabilität

Die Stabilität der Emulsionen gegen Alkalien in Ausrüstungsflotten wurde gemäß dem nachfolgend beschriebenen Test durchgeführt:
500 ml einer wässrigen Lösung der zu untersuchenden Emulsion mit einer Konzentration von 40 g/l wurden in einem 1000 ml Becherglas vorgelegt und mit Natriumhydroxidlösung (w(NaOH) = 10 %) auf einen pH-Wert von 12 eingestellt. Anschließend wurde die Flotte 20 min mit einem Flügelrührer bei 2000 Umdrehungen pro Minute gerührt. Anschließend wurde der Rührer abgestellt, und die Flüssigkeitsoberfläche nach 1 h hinsichtlich Abscheidungen beurteilt.

| | **Beurteilung nach 1 Stunde** |
|---|---|
| Vergleichsbeispiel 1 | starke Abscheidungen |
| Vergleichsbeispiel 2 | starke Abscheidungen |
| Vergleichsbeispiel 3 | leichte Abscheidungen |
| Vergleichsbeispiel 4 | keine Abscheidungen |
| Vergleichsbeispiel 5 | starke Abscheidungen |
| Beispiel 6 | keine Abscheidungen |
| Beispiel 7 | keine Abscheidungen |
| Beispiel 8 | keine Abscheidungen |
| Beispiel 9 | keine Abscheidungen |
| Vergleichsbeispiel 10 | leichte Abscheidungen |

Auch bei pH-Werten von 12 zeigen die erfindungsgemäßen Zubereitungen noch keine Abscheidungstendenzen. Solche Zubereitungen können als pH-Wert stabil eingestuft werden.

Folgende Ausführungsbeispiele sind von der Erfindung umfasst:
1. Polysiloxan, umfassend mindestens einen Baustein der Formel (I) 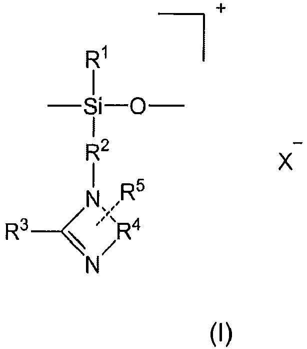 wobei
   R¹ C₁₋₆-Alkyl oder Phenyl,
   R² C₁₋₆-Alkylen,
   R³ ein gesättigter oder mindes
      tens einfach ungesättigter, linearer oder verzweigter Kohlenwasserstoff-Rest mit 7-29, bevorzugt 11-25 Kohlenstoffatomen, ggf. substituiert mit Hydroxy,
   R⁴ -CₐH₂ₐ-, ggf. substituiert mit C₁₋₆-Alkyl, C₁₋₆-Alkoxy, Hydroxy oder Amino,
   R⁵ ein gesättigter, mindestens einfach ungesättigter oder aromatischer Kohlenwasserstoff-Rest mit 1-20 Kohlenstoffatomen, der gegebenenfalls Heteroatome ausgewählt aus S, O und N enthhält, ggf. substituiert ist, und mit einem der beiden Stickstoffatome in der Ringstruktur ein quaternäres Ammoniumion bildet,
   a 2-3, und
   X⁻ ein organisches oder anorganisches Anion,
   ist.
2. Polysiloxan nach Punkt 1, umfassend mindestens einen Baustein der Formel (la) 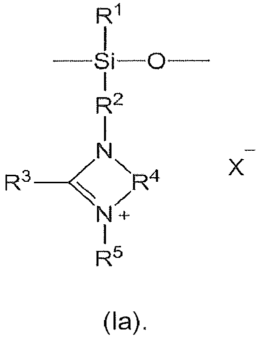
3. Polysiloxan nach Punkt 1 oder 2, wobei R¹ C₁₋₆-Alkyl, bevorzugt Methyl ist.
4. Polysiloxan nach einem der vorherigen Punkte, wobei R² -(CH₂)₃- oder -CH₂-CHCH₃-CH₂- ist.
5. Polysiloxan nach einem der vorherigen Punkte, wobei R³ ein gesättigter oder mindestens einfach ungesättigter Kohlenwasserstoffrest einer Fettsäure ist.
6. Polysiloxan nach einem der vorherigen Punkte, wobei R⁴ -CH₂-CH₂- oder -(CH₂)₃-, bevorzugt -CH₂-CH₂- ist.
7. Polysiloxan nach einem der vorherigen Punkte, wobei R⁵ C₁₋₆-Alkyl, bevorzugt Methyl, Ethyl, oder Benzyl ist.
8. Polysiloxan nach einem der vorherigen Punkte, wobei der Baustein der Formel (I) 0,1-20 mol-%, bevorzugt 0,3-10 mol-%, stärker bevorzugt 0,5-5 mol-% bezogen auf das Polysiloxan ausmacht.
9. Polysiloxan nach einem der vorherigen Punkte, ferner umfassend mindestens einen Baustein der Formel (II) 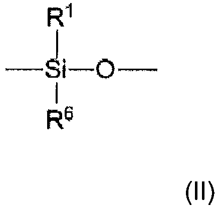 wobei
   - R⁶: C₁₋₁₀-Alkyl oder Phenyl ist.
10. Polysiloxan nach Punkt 9, wobei R⁶ Methyl, Ethyl oder Phenyl ist.
11. Polysiloxan nach einem der vorherigen Punkte, wobei der Baustein der Formel (II) 80-99,9 mol-%, bevorzugt 90-99,7 mol-%, stärker bevorzugt 95-99,5 mol-% bezogen auf das Polysiloxan ausmacht.
12. Polysiloxan nach einem der vorherigen Punkte, ferner umfassend mindestens einen Baustein der Formel (III) 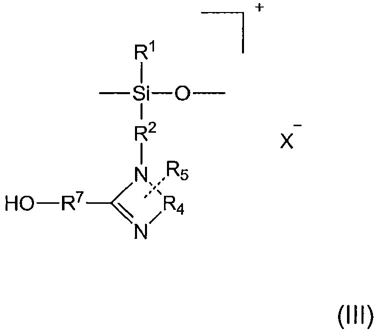 wobei
   - R⁷: C₂₋₆-Alkylen oder C₃₋₆-Alkenylen ist.
13. Polysiloxan nach Punkt 12, umfassend einen Baustein der Formel (IIIa) 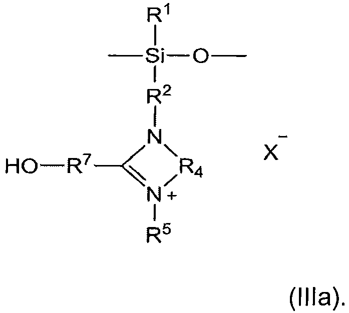
14. Polysiloxan nach Punkt 12 oder 13, wobei R⁷n-Propylen, i-Propylen, n-Butylen, i-Butylen, n-Pentylen, i- Pentylen oder Propenylen, bevorzugt n-Propylen ist.
15. Polysiloxan nach einem der vorherigen Punkte,wobei der Baustein der Formel (III) 0-4 mol-%, bevorzugt 0-3 mol-%, stärker bevorzugt 0-2 mol-% bezogen auf das Polysiloxan ausmacht.
16. Polysiloxan nach einem der vorherigen Punkte, wobei das Polysiloxan jeweils mit R'₃SiO- und -SiR'₃ terminiert ist, wobei R' unabhängig voneinander C₁₋₁₆-Alkyl, C₁₋₁₆-Alkoxy oder -OH, bevorzugt Methyl, Ethyl, n-Propyl, i-Propyl oder-OH ist.
17. Polysiloxan nach Punkt 16, wobei R' unabhängig voneinander Methyl oder -OH ist.
18. Polysiloxan nach einem der Punkte 16 oder 17, wobei das Polysiloxan jeweils mit Me₃SiO- und -SiMe₃; Me₃SiO- und -SiMe₂OH; oder HOMe₂SiO- und -SiMe₂OH terminiert ist.
19. Polysiloxan nach einem der vorherigen Punkte, wobei der Gesamtstickstoffgehalt des Polysiloxans 0,05-6 Gew.-%, bevorzugt 0,1-3 Gew.-% bezogen auf die Gesamtzusammensetzung beträgt.
20. Polysiloxan nach einem der vorherigen Punkte, wobei mindestens 40 %, bevorzugt mindestens 50 %, stärker bevorzugt mindestens 60 % der Heterocyclen im Polysiloxan quaterniert sind.
21. Polysiloxan nach einem der vorherigen Punkte, wobei das gewichtsmittlere Molekulargewicht des Polysiloxans im Bereich 2.000-100.000 g/mol, bevorzugt 2.000-80.000 g/mol, stärker bevorzugt 5.000-60.000 g/mol liegt.
22. Zubereitung, umfassend ein Polysiloxan nach einem der Punkte 1 bis 21 und Wasser und/oder ein organisches Lösungsmittel.
23. Zubereitung nach Punkt 22, wobei das organische Lösungsmittel ausgewählt ist aus halogenierten und nicht-halogenierten Kohlenwasserstoffen, Alkoholen, Glycolen, Ethern, Estern, Ketonen, Aromaten und Polyoxyalkylenen.
24. Zubereitung nach einem der Punkte 22 oder 23, ferner umfassend ein Tensid, anorganische und/oder organische Partikel, Fettsäurekondensate, Polyalkylenwachse, fluorierte Polymere und/oder Silikone.
25. Verfahren zur Herstellung eines Polysiloxans nach einem der Punkte 1 bis 21, umfassend die Schritte:
   (i) Bereitstellen eines Polysiloxans, umfassend mindestens einen Baustein der Formel (IV) 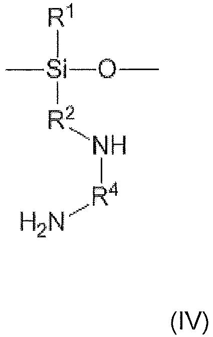
   (ii) Umsetzen des Bausteins der Formel (IV) im Polysiloxan aus Schritt (i) mit R3-COOH und gegebenenfalls 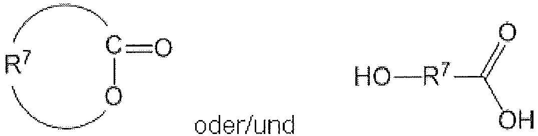 zu Bausteinen der Formel (V) und gegebenenfalls (VI) 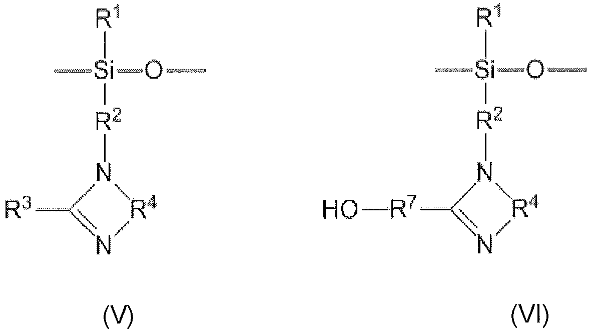 und
   (iii) zumindest teilweises Quaternieren der Stickstoffatome.
26. Verfahren nach Punkt 25, wobei der Quaternierungsgrad im Schritt (iii) bei mindestens 40 %, bevorzugt mindestens 50 %, stärker bevorzugt mindestens 60 % bezogen auf die Heterocyclen im Polysiloxan liegt.
27. Verwendung des Polysiloxans nach einem der Punkte 1-21 oder einer Zubereitung nach einem der Punkte 22-24 zur Textilausrüstung.
28. Verwendung des Polysiloxans nach einem der Punkte 1-21 oder einer Zubereitung nach einem der Punkte 22-24 zur Hydrophobierung von Gegenständen.

## Patentansprüche

1. Polysiloxan, umfassend mindestens einen Baustein der Formel (I) 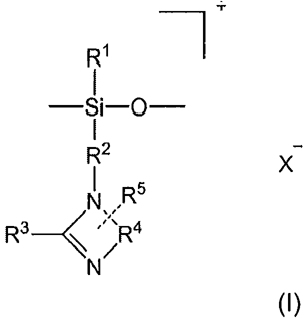 wobei
R¹ C₁₋₆-Alkyl oder Phenyl,
R² C₁₋₆-Alkylen,
R³ ein gesättigter oder mindestens einfach ungesättigter, linearer oder verzweigter Kohlenwasserstoff-Rest mit 7-29, bevorzugt 11-25 Kohlenstoffatomen, ggf. substituiert mit Hydroxy,
R⁴ -CₐH₂ₐ-, ggf. substituiert mit C₁₋₆-Alkyl, C₁₋₆₋Alkoxy, Hydroxy oder Amino,
R⁵ ein gesättigter, mindestens einfach ungesättigter oder aromatischer Kohlenwasserstoff-Rest mit 1-20 Kohlenstoffatomen, der gegebenenfalls Heteroatome ausgewählt aus S, O und N enthhält, ggf. substituiert ist, und mit einem der beiden Stickstoffatome in der Ringstruktur ein quaternäres Ammoniumion bildet,
a 2-3, und
X⁻ ein organisches oder anorganisches Anion ist,
wobei der Baustein der Formel (I) bevorzugt 0,1-20 mol-%, stärker bevorzugt 0,3-10 mol-%, noch stärker bevorzugt 0,5-5 mol-% bezogen auf das Polysiloxan
ausmacht.

2. Polysiloxan nach Anspruch 1, wobei R¹ C₁₋₆-Alkyl, bevorzugt Methyl ist.

3. Polysiloxan nach einem der vorherigen Ansprüche, wobei R² -(CH₂)₃- oder -CH₂-CHCH₃-CH₂- ist.

4. Polysiloxan nach einem der vorherigen Ansprüche, wobei R³ ein gesättigter oder mindestens einfach ungesättigter Kohlenwasserstoffrest einer Fettsäure ist.

5. Polysiloxan nach einem der vorherigen Ansprüche, wobei R⁴ -CH₂-CH₂- oder -(CH₂)₃-, bevorzugt -CH₂-CH₂- ist.

6. Polysiloxan nach einem der vorherigen Ansprüche, wobei R⁵ C₁₋₆-Alkyl, bevorzugt Methyl, Ethyl, oder Benzyl ist.

7. Polysiloxan nach einem der vorherigen Ansprüche, ferner umfassend mindestens einen Baustein der Formel (II) 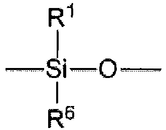 wobei
R⁶ C₁₋₁₀-Alkyl oder Phenyl ist, wobei
der Baustein der Formel (II) bevorzugt 80-99,9 mol-%, stärker bevorzugt 90-99,7 mol-%, noch stärker bevorzugt 95-99,5 mol-% bezogen auf das Polysiloxan ausmacht.

8. Polysiloxan nach einem der vorherigen Ansprüche, ferner umfassend mindestens einen Baustein der Formel (III) 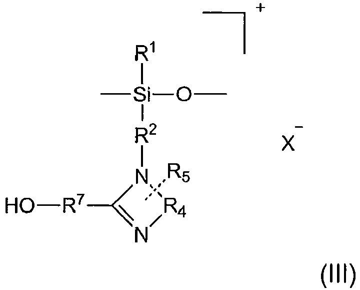 wobei
R⁷ C₂₋₆-Alkylen oder C₃₋₆-Alkenylen ist,
wobei der Baustein der Formel (III) bevorzugt 0-4 mol-%, stärker bevorzugt 0-3 mol-%, noch stärker bevorzugt 0-2 mol-% bezogen auf das Polysiloxan ausmacht.

9. Polysiloxan nach einem der vorherigen Ansprüche, wobei das Polysiloxan jeweils mit R'₃SiO- und -SiR'₃ terminiert ist, wobei R' unabhängig voneinander C₁₋₁₆-Alkyl, C₁₋₁₆-Alkoxy oder -OH, bevorzugt Methyl, Ethyl, n-Propyl, i-Propyl oder -OH ist.

10. Polysiloxan nach einem der vorherigen Ansprüche, wobei mindestens 40 %, bevorzugt mindestens 50 %, stärker bevorzugt mindestens 60 % der Heterocyclen im Polysiloxan quaterniert sind.

11. Zubereitung, umfassend ein Polysiloxan nach einem der Ansprüche 1 bis 10 und Wasser und/oder ein organisches Lösungsmittel.

12. Verfahren zur Herstellung eines Polysiloxans nach einem der Ansprüche 1 bis 10, umfassend die Schritte:
(i) Bereitstellen eines Polysiloxans, umfassend mindestens einen Baustein der Formel (IV) 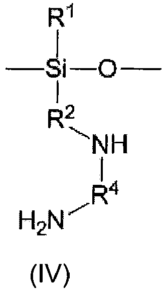
(ii) Umsetzen des Bausteins der Formel (IV) im Polysiloxan aus Schritt (i) mit R3-COOH und gegebenenfalls 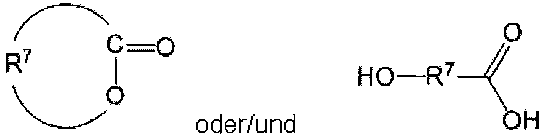 zu Bausteinen der Formel (V) und gegebenenfalls (VI) 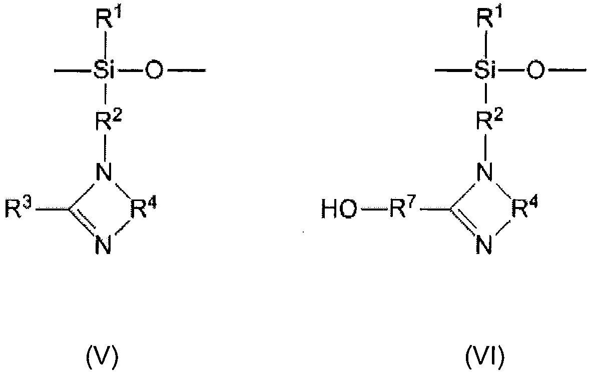 und
(iii) zumindest teilweises Quaternieren der Stickstoffatome.

13. Verfahren nach Anspruch 12, wobei der Quaternierungsgrad im Schritt (iii) bei mindestens 40 %, bevorzugt mindestens 50 %, stärker bevorzugt mindestens 60 % bezogen auf die Heterocyclen im Polysiloxan liegt.

14. Verwendung des Polysiloxans nach einem der Ansprüche 1-10 oder einer Zubereitung nach Anspruch 11 zur Textilausrüstung.

15. Verwendung des Polysiloxans nach einem der Ansprüche 1-10 oder einer Zubereitung nach Anspruch 11 zur Hydrophobierung von Gegenständen.

## Claims

1. Polysiloxane, comprising at least one structural element of the formula (I), 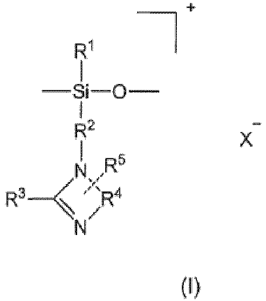 wherein:
R¹ is C₁₋₆ alkyl or phenyl,
R² is C₁₋₆ alkylene,
R³ is a saturated or at least monounsaturated, linear or branched hydrocarbon functional group having 7-29, preferably 11-25 carbon atoms, optionally substituted by hydroxyl,
R⁴ is -CₐH₂ₐ-, optionally substituted by C₁₋₆ alkyl, C₁₋₆ alkoxyl, hydroxyl or amino,
R⁵ is a saturated, at least monounsaturated or aromatic hydrocarbon functional group having 1-20 carbon atoms, which optionally contains heteroatoms selected from S, O and N, is optionally substituted, and forms a quaternary ammonium ion together with one of the two nitrogen atoms,
a is 2-3, and
X⁻ is an organic or inorganic anion, and
wherein the structural element of the formula (I) is preferably 0.1-20 mol.%, more preferably 0.3-10 mol.%, and even more preferably 0.5-5 mol.%, based on the polysiloxane.

2. Polysiloxane according to claim 1, wherein R¹ is C₁₋₆ alkyl, preferably methyl.

3. Polysiloxane according to either of the preceding claims, wherein R² is -(CH₂)₃- or -CH₂-CHCH₃-CH₂-.

4. Polysiloxane according to any of the preceding claims, wherein R³ is a saturated or at least monounsaturated hydrocarbon functional group of a fatty acid.

5. Polysiloxane according to any of the preceding claims, wherein R⁴ is -CH₂-CH₂- or - (CH₂)₃, preferably -CH₂-CH₂-.

6. Polysiloxane according to any of the preceding claims, wherein R⁵ is C₁₋₆ alkyl, preferably methyl, ethyl or benzyl.

7. Polysiloxane according to any of the preceding claims, further comprising at least one structural element of the formula (II), 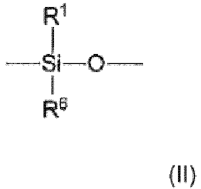 wherein R⁶ is C₁₋₁₀ alkyl or phenyl, and
wherein the structural element of the formula (II) is preferably 80-99.9 mol.%, more preferably 90-99.7 mol.%, and even more preferably 95-99.5 mol.%, based on the polysiloxane.

8. Polysiloxane according to any of the preceding claims, further comprising at least one structural element of the formula (III) 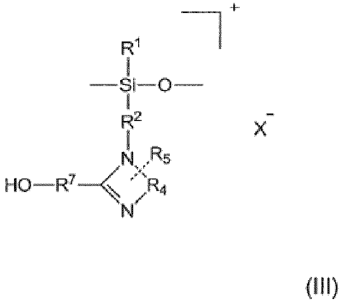 wherein R⁷ is C₂₋₆ alkylene or C₃₋₆ alkenylene, and
wherein the structural element of the formula (III) is preferably 0-4 mol.%, more preferably 0-3 mol.%, and even more preferably 0-2 mol.%, based on the polysiloxane.

9. Polysiloxane according to any of the preceding claims, wherein the polysiloxane is terminated by R'₃SiO- and -SiR'₃ in each case, wherein R' is C₁₋₁₆ alkyl, C₁₋₁₆ alkoxyl or -OH, preferably methyl, ethyl, n-propyl, i-propyl or -OH, independently of one another.

10. Polysiloxane according to any of the preceding claims, wherein at least 40%, preferably at least 50%, and more preferably at least 60% of the heterocycles are quaternised in the polysiloxane.

11. Preparation comprising a polysiloxane according to any of claims 1-10, together with water and/or an organic solvent.

12. Method for preparing a polysiloxane according to any of claims 1 to 10, comprising the following steps:
(i) preparing a polysiloxane comprising at least one structural element of the formula (IV), 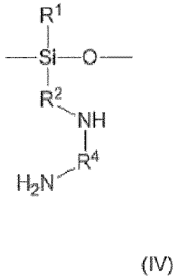
(ii) reacting the structural element of the formula (IV) in the polysiloxane from step (i) with R₃-COOH and optionally 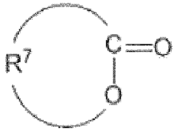 or/and 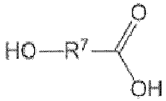 to form structural elements of the formula (V) and optionally (VI), 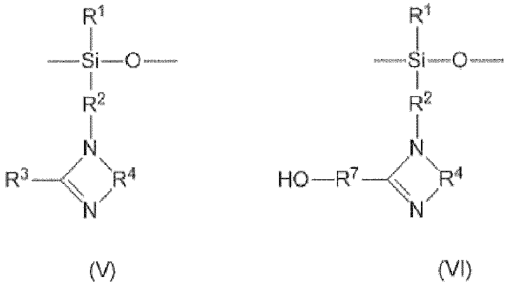 and
(iii) at least partial quaternisation of the nitrogen atoms.

13. Method according to claim 12, wherein the degree of quaternisation in step (iii) is at least 40%, preferably at least 50%, and more preferably at least 60%, based on the heterocycles in the polysiloxane.

14. Use of the polysiloxane according to any of claims 1-10 or of a preparation according to claim 11 for textile finishing.

15. Use of the polysiloxane according to any of claims 1-10 or of a preparation according to claim 11 for waterproofing objects.

## Revendications

1. Polysiloxane, comprenant au moins un composant de formule (I) 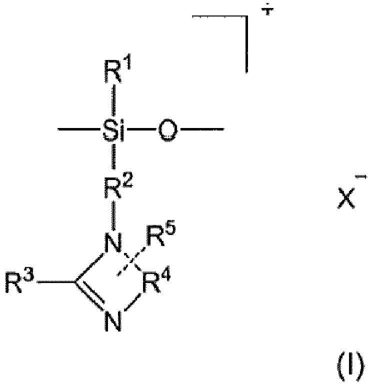 dans laquelle
R¹ est un groupe alkyle en C₁ à C₆ ou phényle,
R² est un groupe alkylène en C₁ à C₆,
R³ est un radical hydrocarbure saturé ou au moins mono-insaturé, linéaire ou ramifié, avec 7 à 29, de préférence 11 à 25, atomes de carbone, éventuellement substitué par un groupe hydroxy,
R⁴ est -CₐH₂ₐ-, éventuellement substitué par un groupe alkyle en C₁ à C₆, alcoxy en C₁ à C₆, hydroxy ou amino,
R⁵ est un radical hydrocarbure saturé, au moins mono-insaturé ou aromatique, avec 1 à 20 atomes de carbone qui contient éventuellement des hétéroatomes choisis parmi S, O et N, éventuellement substitué et forme avec l'un des deux atomes d'azote, dans la structure cyclique, un ion ammonium quaternaire,
a est 2 à 3, et
X⁻ est un anion organique ou inorganique,
dans lequel le composant de formule (I) constitue de préférence 0,1 à 20 % en mole, de manière davantage préférée 0,3 à 10% en mole, de manière encore davantage préférée 0,5 à 5 % en mole, par rapport au polysiloxane.

2. Polysiloxane selon la revendication 1, dans lequel R¹ est un groupe alkyle en C₁ à C₆, de préférence un groupe méthyle.

3. Polysiloxane selon l'une des revendications précédentes, dans lequel R² est - (CH₂)₃- ou -CH₂-CHCH₃-CH₂.

4. Polysiloxane selon l'une des revendications précédentes, dans lequel R³ est un radical hydrocarbure saturé ou au moins mono-insaturé d'un acide gras.

5. Polysiloxane selon l'une des revendications précédentes, dans lequel R⁴ est -CH₂-CH₂- ou -(CH₂)₃-, de préférence -CH₂-CH₂-.

6. Polysiloxane selon l'une des revendications précédentes, dans lequel R⁵ est un groupe alkyle en C₁ à C₆, de préférence un groupe méthyle, éthyle ou benzyle.

7. Polysiloxane selon l'une des revendications précédentes, comprenant en outre au moins un composant de formule (II) 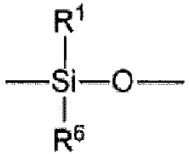 dans laquelle
R⁶ est un groupe alkyle en C₁ à C₁₀ ou phényle, dans lequel
le composant de formule (II) constitue de préférence 80 à 99,9 % en mole, de manière davantage préférée 90 à 99,7 % en mole, de manière encore davantage préférée 95 à 99,5 % en mole, par rapport au polysiloxane.

8. Polysiloxane selon l'une des revendications précédentes, comprenant en outre au moins un composant de formule (III) 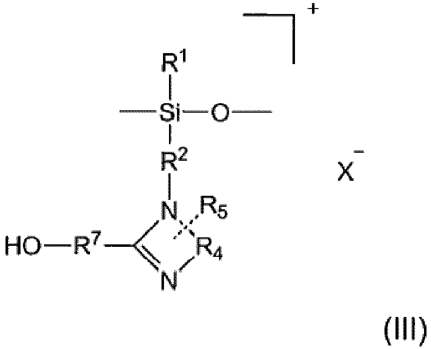 dans laquelle
R⁷ est un groupe alkylène en C₂ à C₆ ou alcénylène en C₃ à C₆,
dans lequel le composant de formule (III) constitue de préférence 0 à 4 % en mole, de manière davantage préférée 0 à 3 % en mole, de manière encore davantage préférée 0 à 2 % en mole, par rapport au polysiloxane.

9. Polysiloxane selon l'une des revendications précédentes, dans lequel le polysiloxane est terminé respectivement par R'₃SiO- et -SiR'₃, dans lequel R' est un groupe alkyle en C₁ à C₁₆, alcoxy en C₁ à C₁₆ ou -OH, indépendamment les uns des autres, de préférence un groupe méthyle, éthyle, n-propyle, i-propyle ou -OH.

10. Polysiloxane selon l'une des revendications précédentes, dans lequel au moins 40 %, de préférence au moins 50 %, de manière davantage préférée au moins 60 %, des hétérocycles dans le polysiloxane sont quaternisés.

11. Préparation, comprenant un polysiloxane selon l'une des revendications 1 à 10 et de l'eau et/ou un solvant organique.

12. Procédé de production d'un polysiloxane selon l'une des revendications 1 à 10, comprenant les étapes de :
(i) fourniture d'un polysiloxane, comprenant au moins un composant de formule (IV) 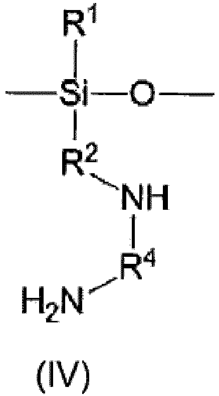
(ii) réaction du composant de formule (IV) dans le polysiloxane de l'étape (i) avec R₃-COOH et éventuellement 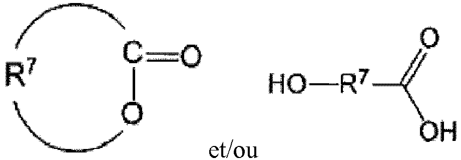 pour donner des composants de formule (V) et éventuellement (VI) 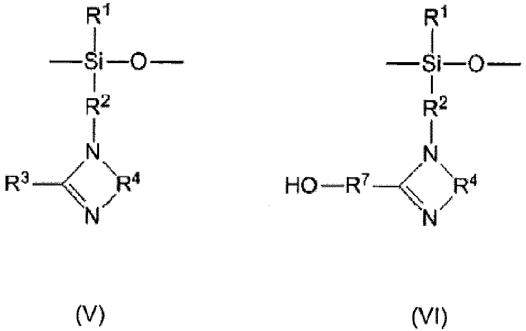 et
(iii) quaternisation au moins partielle des atomes d'azote.

13. Procédé selon la revendication 12, dans lequel le degré de quaternisation de l'étape (iii) est d'au moins 40 %, de préférence d'au moins 50 %, de manière davantage préférée d'au moins 60 %, par rapport aux hétérocycles dans le polysiloxane.

14. Utilisation du polysiloxane selon l'une des revendications 1 à 10 ou d'une préparation selon la revendication 11 pour l'apprêtage textile.

15. Utilisation du polysiloxane selon l'une des revendications 1 à 10 ou d'une préparation selon la revendication 11 pour l'hydrophobisation d'objets.
